# EUROPEAN PATENT SPECIFICATION

(11) **EP 4 571 943 B1**
(45) Date of publication and mention of the grant of the patent: **02.09.2026**
(21) Application number: 24852176.7
(22) Date of filing: 30.07.2024
(51) Int. Cl.: H01M 10/613, H01M 10/6556, H01M 10/6551, H01M 50/502, B60L 58/24, H01M 10/617

(54) **BATTERY PACK WITH IMPROVED COOLING PERFORMANCE OF TERMINAL BUSBAR**
BATTERIEPACK MIT VERBESSERTER KÜHLLEISTUNG DER ANSCHLUSSSAMMELSCHIENE
BLOC-BATTERIE À PERFORMANCE DE REFROIDISSEMENT AMÉLIORÉE DE BARRE OMNIBUS DE BORNE

(30) Priority: 09.08.2023 KR 20230104024
(43) Date of publication of application: 18.06.2025
(73) Proprietor: LG Energy Solution, Ltd., Seoul 07335 (KR)
(72) Inventor: KIM, Ki Young, Daejeon 34122 (KR); KIM, Young Man, Daejeon 34122 (KR); HAN, Nyeon Gu, Daejeon 34122 (KR); LEE, Hyoung Suk, Daejeon 34122 (KR)
(74) Representative: Plasseraud IP
(86) International application number: PCT/KR2024/011166
(87) International publication number: WO 2025/033822

(56) References cited:
- KR-A- 20130 118 145
- KR-A- 20180 117 033
- KR-A- 20190 140 669
- KR-A- 20210 065 268
- KR-A- 20220 052 609
- KR-B1- 102 205 662
- KR-B1- 102 205 662
- US-A1- 2012 009 455
- US-A1- 2020 243 926
- US-A1- 2021 296 721

## Description

### [Technical Field]

The present disclosure relates to a battery pack, and more particularly to a battery pack capable of reducing the temperature deviation of the maximum heat generated at the terminal busbar, which is the end of the electrical connection between the battery cells, during rapid charging.

### [Background]

Secondary batteries, with their ease of application, high energy density, and other electrical characteristics, have become ubiquitous in portable devices as well as electric vehicles (EVs) or hybrid electric vehicles (HEVs) powered by electricity. These secondary batteries are attracting attention as a new energy source for eco-friendly and energy efficiency, not only because they can dramatically reduce the use of fossil fuels, but also because they do not produce any byproducts.

The types of secondary batteries that are widely used today include lithium-ion batteries, lithium polymer batteries, nickel-cadmium batteries, nickel-hydrogen batteries, and nickel-zinc batteries. The operating voltage of these unit secondary batteries, or cells, is about 2.5 to 4.5 V. Therefore, if a higher output voltage is required, a plurality of battery cells is connected in series to form a battery pack. Also, depending on the charge and discharge capacity required for the battery pack, a plurality of battery cells may be connected in parallel to form a battery pack. Therefore, the number of battery cells included in the battery pack and their electrical connections can be designed to vary depending on the required output voltage or charge/discharge capacity.

Meanwhile, when a plurality of battery cells is connected in series and/or parallel to form a battery pack, it is common to first configure a battery module or unit including at least one battery cell, electrically connect these battery modules or units, and add other components, such as temperature sensors, BMS, venting devices, and the like, to form a battery pack.

As a condition for ensuring stable performance and lifetime of a battery pack, it is important that the plurality of battery cells accommodated in the battery pack perform uniformly, and the temperature deviation between the battery cells is used as an indicator to evaluate this. The temperature of a battery cell during charging and discharging can be used to determine whether the battery cell is functioning normally, and as a result, if the temperature deviation between the battery cells is large, it indicates a problem with the quality of the battery pack. Therefore, the quality control (QC) of the battery pack has specifications for the temperature deviation between the battery cells as an evaluation item.

Temperature deviations in the battery cells are often a problem, especially during rapid charging, when the maximum heat is generated at the terminal busbar, the end of the electrical connection between the battery cells. When the maximum heat is generated at the terminal busbar, a temperature deviation occurs between battery cells adjacent to the terminal busbar and battery cells separated from it. Therefore, intensive cooling of the terminal busbar, the area of high temperature generation, is necessary to pass quality control.

US 2021/296721 relates to cooling of bus bars.

### [Summary]

### [Technical Problem]

The present disclosure aims to reduce the temperature deviation between the battery cells by intensive cooling of the terminal busbar, which is the end of the electrical connection between the battery cells, and thereby improve the performance of the battery pack.

However, the technical challenges that the present disclosure seeks to address are not limited to the challenges described above, and other challenges not mentioned will be apparent to those of ordinary skill in the art from the detailed description set forth below.

### [Technical Solution]

The present disclosure relates to a heat sink assembly, in one example, includes: a heat sink integrally molded with a plurality of ribs therein along a longitudinal direction by extrusion molding, the spaces between the ribs forming coolant flow paths, and having open first and second faces at both ends in the longitudinal direction; and an end plug closing the first and second faces of both ends of the heat sink, wherein on the upper surface of the heat sink, a first heat transfer material protruding to contact a bottom surface of a terminal busbar provided on a battery module to be mounted on the heat sink is provided.

The first heat transfer material is provided in a trench forming a concave space on the upper surface of the heat sink.

The trench may be formed along a longitudinal direction of the heat sink.

The bottom surface of the trench is provided with a pin structure, wherein the first heat transfer material may be fixed on the pin structure.

An inlet flow path through which coolant flows into the heat sink is located below the bottom surface of the trench.

**In** addition, the inlet flow path includes an extension flow path protruding above the upper surface of the heat sink, wherein the trench may share a side wall with the extension flow path.

Meanwhile, the present disclosure provides a battery pack including: the heat sink assembly having the above-mentioned configuration; and at least one battery module mounted on the upper surface of the heat sink assembly, wherein heat generated by a terminal busbar provided in the battery module is transferred to the first heat transfer material by way of conduction heat transfer.

Depending on the aspect, the battery pack may include: a second heat transfer material provided on the surface of the terminal busbar, and a heat conduction member in contact with the second heat transfer material, wherein heat generated in the terminal busbar is transferred to the first heat transfer material by way of conduction heat transfer via the second heat transfer material and heat conduction member.

In addition, the present disclosure may provide a battery pack including: a heat sink assembly including a trench accommodating the first heat transfer material; and at least one battery module mounted on the upper surface of the heat sink assembly, wherein the bottom surface of a terminal busbar provided in the battery module contacts the first heat transfer material provided in the trench, whereby heat generated by the terminal busbar is transferred to the first heat transfer material by way of conduction heat transfer.

Here, the trench is formed by extending along the longitudinal direction from center region of the heat sink in a width direction, a plurality of battery modules are alignment mounted with their respective terminal busbars facing the trench, wherein the trench may overlap at least a portion of an inlet flow path through which coolant flows into the heat sink.

### [Advantageous Effects]

According to an aspect of the present disclosure having the above configuration, when a battery module is mounted on a heat sink, the heat generated by a terminal busbar provided in the battery module is transferred to a first heat transfer material by conduction heat transfer, and finally the heat of the terminal busbar is released to the outside through the coolant flowing inside the heat sink.

As such, the heat sink assembly of the present disclosure helps to maintain a uniform temperature of the battery cells by actively absorbing and dissipating heat from the terminal busbar, which has a significant impact on the temperature deviation between the plurality of battery cells, thereby improving the quality of the battery pack.

However, the technical effects of the present disclosure are not limited to those described above, and other effects not mentioned will be apparent to those of ordinary skill in the art from the detailed description set forth below.

### [Brief Description of the Drawings]

Because the following drawings attached to the present specification illustrate exemplary aspects of the present disclosure and serve to facilitate understanding of the technical idea of the present disclosure together with the detailed description of the disclosure described below, the present disclosure should not be limitedly interpreted on the basis of the drawings.
FIG. 1 is a drawing illustrating a heat sink assembly according to one aspect of the present disclosure.
FIG. 2 is an exploded perspective view of the heat sink assembly.
FIG. 3 is a cross-sectional view showing the structure of the trench.
FIG. 4 is a cross-sectional view illustrating another aspect of the trench.
FIG. 5 is a drawing illustrating one aspect of an inlet flow path for a heat sink.
FIG. 6 is a drawing illustrating one aspect of a battery module mounted to the heat sink assembly of FIG. 1.
FIG. 7 is a drawing illustrating one aspect of a terminal busbar contacting a heat transfer material in a trench.
FIG. 8 is a drawing illustrating another aspect in which the terminal busbar is thermally connected to the heat transfer material on the upper surface of the heat sink.

### [Best Mode for the Invention]

The present disclosure may have various modifications and various aspects, and thus specific aspects thereof will be described in detail below.
The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

In addition, in the present disclosure, when a part of a layer, film, region, plate, or the like is disposed "on" another part, this includes not only a case in which one part is disposed "directly on" another part, but a case in which still another part is interposed therebetween. In contrast, when a part of a layer, film, region, plate, or the like is disposed "under" another part, this includes not only a case in which one part is disposed "directly under" another part, but a case in which still another part is interposed therebetween. In addition, in the present application, "on" may include not only a case of being disposed on an upper portion but also a case of being disposed on a lower portion.

The present disclosure relates to a heat sink assembly, in one example, includes: a heat sink integrally molded with a plurality of ribs therein along a longitudinal direction by extrusion molding, the spaces between the ribs forming coolant flow paths, and having open first and second faces at both ends in the longitudinal direction; and an end plug closing the first and second faces of both ends of the heat sink, wherein on the upper surface of the heat sink, a first heat transfer material protruding to contact a bottom surface of a terminal busbar provided on a battery module to be mounted on the heat sink is provided.

Accordingly, when a battery module is mounted on the heat sink, the heat generated by the terminal busbar provided on the battery module is transferred to the first heat transfer material by way of conduction heat transfer, and finally the heat of the terminal busbar is released to the outside through the coolant flowing inside the heat sink.

As such, the heat sink assembly of the present disclosure helps to maintain a uniform temperature of the battery cells by actively absorbing and dissipating heat from the terminal busbar, which has a significant impact on the temperature deviation between the plurality of battery cells, thereby improving the quality of the battery pack.

### [Mode for Practicing the Disclosure]

Hereinafter, with reference to the accompanying drawings, a specific aspect of a battery pack 10 according to the present disclosure will be described in detail. For reference, the directions of front to back, up and down, and left and right used in the following description to designate relative positions are intended to aid in the understanding of the disclosure and refer to the directions shown in the drawings unless otherwise defined.

### [First aspect]

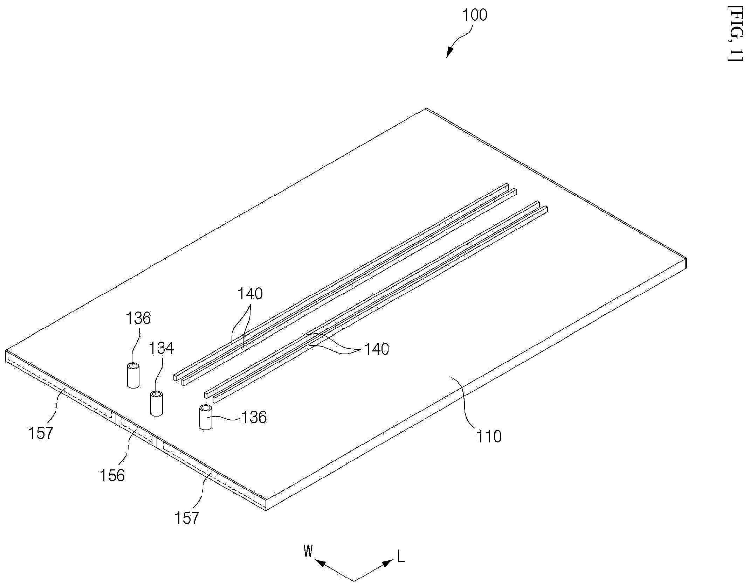

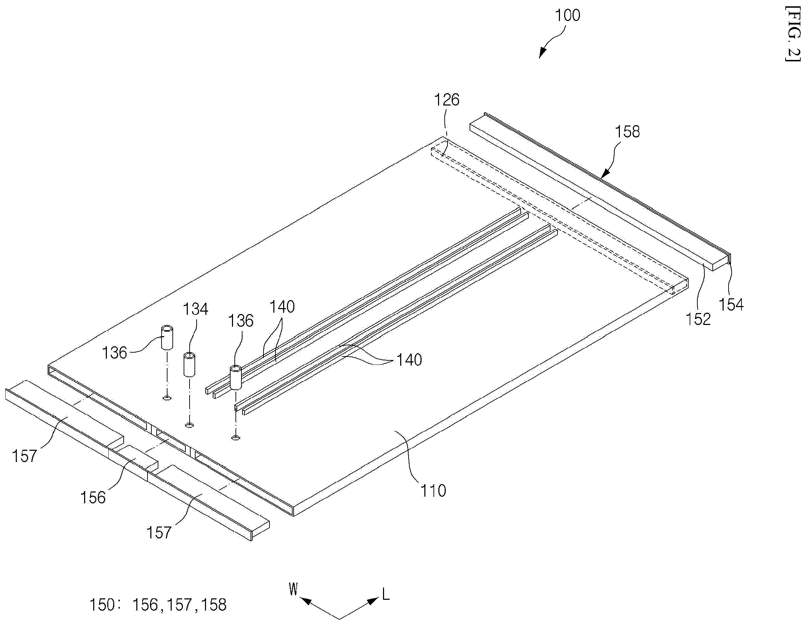

FIG. 1 is a drawing illustrating one aspect of a heat sink assembly 100 for a battery pack 10 of the present disclosure, and FIG. 2 is an exploded perspective view of the heat sink assembly 100. The heat sink assembly 100 of the present disclosure includes a heat sink 110 manufactured by extrusion molding, and a plurality of end plugs 150.

The heat sink 110 is a configuration corresponding to a main body, manufactured as a continuum by extrusion molding, with a plurality of ribs 112 integrally molded along the inner longitudinal direction L. The heat sink 110 may be prepared by cutting an extruded part manufactured as a continuum to a designed length.

The plurality of ribs 112 are spaced apart at a suitable distance along the width direction W, with each space between the ribs 112 functioning as a flow path 120 (coolant flow path) through which a coolant (such as cooling water) flows. And, if the faces both longitudinal direction L ends of the heat sink 110 form are referred to as the first face 130 and the second face 132, respectively, the first face 130 and the second face 132 are open. That is, the ribs 112 formed inside the heat sink 110 can be accessed through the first face 130 and the second face 132.

Here, the longitudinal direction L is defined to refer to the extrusion molding direction of the heat sink 110, i.e., the direction in which the ribs 112 extend, and the width direction W is defined to refer to the direction orthogonal to the longitudinal direction L in which the plurality of ribs 112 are spaced apart.

A plurality of end plugs 150 couple to close first and second faces 130, 132 of both ends of the heat sink 110, respectively. The end plugs 150 include an insert 152 that is inserted into the heat sink 110 and a front face 154 that covers the first and second faces 130 and 132 of the heat sink 110 after coupling. That is, the end plugs 150 are substantially shaped like the letter "T" when viewed in the width direction W. The front face 154 of the end plug 150 is shaped to correspond to the outlines of the first and second faces 130, 132, and the insert 152 is shaped to fit exactly into the interior cavity of the heat sink 110.

Machining is performed on the plurality of ribs 112 to cut portions of both ends thereof to form a space for the insert 152 of the end plug 150 to be inserted, and to form a flow path for coolant to flow in and out of the heat sink 110. Referring to one aspect shown in FIG. 2, a first face 130 of the heat sink 110 is disposed with an inlet port 134 through which coolant flows in, and an outlet port 136 through which coolant flows out, to which three end plugs 150 are coupled for this purpose. That is, on the first face 132, one inlet plug 156 is coupled in the center of the heat sink 110, and one outlet plug 157 is coupled on either side thereof; and on the second face 132, one return plug 158 is coupled to form a return flow path 126 for the coolant.

The central flow path 120 assigned to the inlet plug 156 forms the inlet flow path 122, and the coolant striking the return plug 158 on the second face 132 flows into the outlet flow path 124 on either side of the inlet flow path 122, which is formed by the two outlet plugs 157. A flow space is formed between the insert 152 of the inlet plug 156 and the end of the rib 112 to allow coolant supplied through the inlet port 134 to flow uniformly into the plurality of inlet flow paths 122. Similarly, a flow space is formed in the return plug 158 and the outlet plug 157, and the flow space between these end plugs 150 and the ribs 112 is achieved by machining (e.g., milling) to cut both ends of the ribs 112.

The upper surface of the heat sink 110 is provided with a first heat transfer material 160 that protrudes to contact the bottom surface of the terminal busbar 212 provided in the battery module 200 to be mounted on the heat sink 110. That is, the first heat transfer material 160 provided on the upper surface of the heat sink 110 protrudes to contact the bottom surface of the terminal busbar 212, corresponding to the mounting position of the battery module 200.

The first heat transfer material 160 absorbs heat from the terminal busbar 212 in the form of conduction heat transfer and transfers it to the heat sink 110. Therefore, the first heat transfer material 160 needs to be a material with good thermal conductivity for good heat dissipation. For example, the first heat transfer material 160 may include various thermal conductivity enhancers, such as thermal interface materials (TIMs), fillers, and the like. The first heat transfer material 160 may be curable or non-curable.

When the battery module 200 is mounted on top of the heat sink 110, the heat generated by the terminal busbar 212 provided in the battery module 200 is transferred to the first heat transfer material 160 by way of conduction heat transfer, and finally the heat from the terminal busbar 212 is released to the outside through the coolant (cooling water) flowing inside the heat sink 110.

As such, the heat sink assembly 100 of the present disclosure can help to maintain a uniform temperature of the battery cells by effectively absorbing and dissipating heat from the terminal busbar 212, which has a significant impact on the temperature deviation between the plurality of battery cells, such as maximum heat generation during rapid charge and discharge, thereby improving the quality of the battery pack 10.

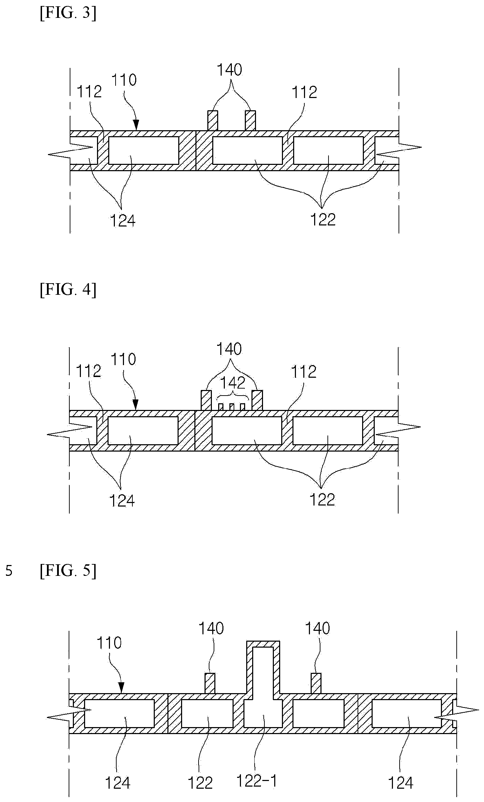

In the exemplary aspect shown in the figures, the first heat transfer material 160 is provided in a trench 140 that forms a concave space in the upper surface of the heat sink 110. As shown in FIG. 3, the trench 140 forms a narrow, elongated ditch-like accommodating space, and the space within the trench 140 is filled with the first heat transfer material 160. The trench 140 reliably fixes the first heat transfer material 160 in place, even when the first heat transfer material 160 is fluid. Thus, the trench 140 functions as a structure that ensures that the first heat transfer material 160 contacts the terminal busbar 212.

The trench 140 may be formed continuously along the longitudinal direction L of the heat sink 110. As described above, the longitudinal direction L of the heat sink 110 corresponds to the extrusion molding direction of the heat sink 110, and along with the ribs 112 forming the flow path 120, the trenches 140 may also be integrally formed into the heat sink 110 via extrusion molding. And, as will be described later, when a plurality of battery modules 200 are mounted to the heat sink assembly 100, the terminal busbars 212 of each battery module 200 may be aligned to face the trenches 140.

FIG. 4 is a cross-sectional view illustrating another aspect of the trench 140. In the aspect of FIG. 4, the bottom surface of the trench 140 is provided with pin structures 142. The pin structures 142 may form a plurality of rows and may be integrally formed during extrusion of the heat sink 110 along with the trench 140. The pin structures 142 provide a large contact area for fixing the first heat transfer material 160, as well as an expanded heat conduction area. Thus, the trench 140 structure with the pin structure 142 may be more effective for heat dissipation of the terminal busbar 212.

And, as shown in FIGS. 3 and 4, below the bottom surface of the trench 140, an inlet flow path 122 may be located through which coolant is introduced into the heat sink 110. By having the flow path 120 inside the heat sink 110 at least partially overlap the trench 140, heat from the first heat transfer material 160 fixed within the trench 140 can be more effectively released into the coolant.

In particular, it may be more preferred that the flow path 120 that overlap the trench 140 is inlet flow path 122. Since the coolant flowing through the inlet flow path 122 is at a relatively lower temperature than the coolant in the outlet flow path 124, more efficient cooling of the terminal busbar 212 can be expected.

FIG. 5 is a drawing illustrating one aspect of an inlet flow path 122 of the heat sink 110. In the aspect of FIG. 5, the inlet flow path 122 includes an extension flow path 122-1 that protrudes above the upper surface of the heat sink 110. That is, relative to the upper surface of the heat sink 110, the inlet flow path 122 spans above and below the upper surface. For example, the cross-sectional shape of the inlet flow path 122 may form an "inverted T" of the English alphabet. Further, the extension flow path 122-1 and the trench 140 may share one side wall of each other that protrudes above the upper surface of the heat sink 110. The aspect of FIG. 5 may result in improved cooling of the terminal busbar 212 due to the increased flow rate of the coolant as the inlet flow path 122 includes the extension flow path 122-1, and the expansion of the heat transfer area through the mutually shared one side wall.

### [Second aspect]

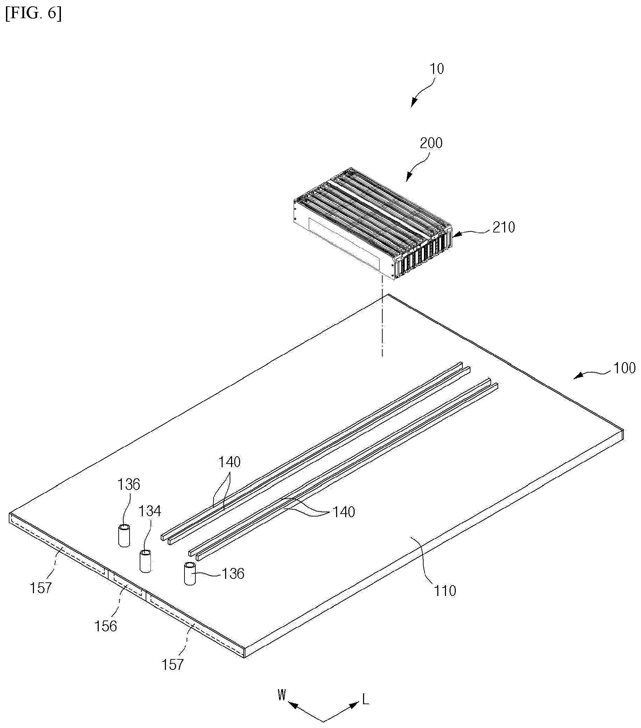

FIG. 6 is a drawing illustrating an aspect in which a battery module 200 is mounted to the heat sink assembly 100 described in the first aspect. While FIG. 6 illustrates a single battery module 200 being mounted to the heat sink assembly 100, a number of battery modules 200 may be densely packed to correspond to the mounting area of the heat sink assembly 100, thereby completing the battery pack 10.

A battery pack 10 provided by the present disclosure includes a heat sink assembly 100 having a configuration as described above, and at least one battery module 200 mounted on a upper surface of the heat sink assembly 100. Heat generated by the terminal busbars 212 provided on the battery modules 200 is transferred to the first heat transfer material 160 provided on the upper surface of the heat sink assembly 100 by way of conduction heat transfer.

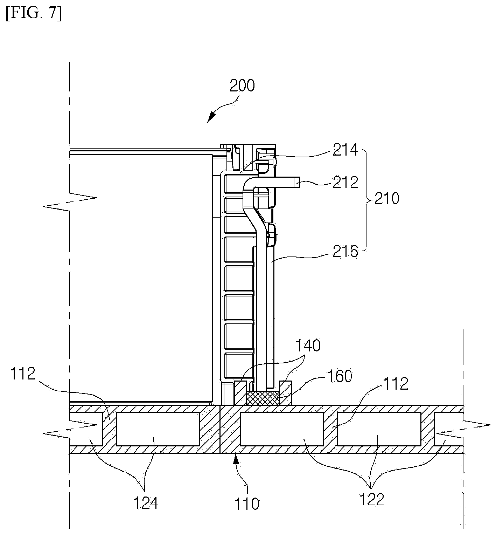

FIG. 7 is a drawing illustrating one aspect of a terminal busbar 212 contacting a first heat transfer material 160 in a trench 140. The upper surface of the heat sink assembly 100 is provided with the trench 140 forming a space in which the first heat transfer material 160 is fixed, and when the battery module 200 is mounted at a predetermined location on the upper surface of the heat sink assembly 100, the bottom surface of the terminal busbar 212 provided on the battery module 200 contacts the first heat transfer material 160 provided in the trench 140. Accordingly, the heat generated by the terminal busbar 212 is transferred to the first heat transfer material 160 by way of conduction heat transfer, and finally, the heat from the terminal busbar 212 is dissipated to the outside by the coolant flowing inside the heat sink assembly 100.

The battery module 200 includes a busbar frame assembly 210 having a plurality of terminal busbars 212 for electrically connecting leads of a plurality of battery cells. The busbar frame assembly 210 includes a main frame 214 to which the terminal busbars 212 are fixed, and a cover 216 to protect the terminal busbars 212. The battery module 200 is mounted on the heat sink assembly 100 with the busbar frame assembly 210 facing the trench 140.

The terminal busbar 212 has its bottom surface exposed relative to the busbar frame assembly 210, and the exposed bottom surface of the terminal busbar 212 contacts the first heat transfer material 160 provided in the trench 140, whereby heat generated by the terminal busbar 212 is transferred to the first heat transfer material 160 by way of conduction heat transfer.

Here, the trench 140 may be formed extending along the longitudinal direction L from a central region in the width direction W of the heat sink 110. That is, the trench 140, along with the ribs 112 forming the internal flow path 120, may be formed integrally during the extrusion molding process of the heat sink 110. Accordingly, when mounting the plurality of battery modules 200 to the heat sink assembly 100, alignment of the plurality of battery modules 200 with respect to the trenches 140 formed in a row and contact of the terminal busbars 212 to the first heat transfer material 160 are facilitated.

And, to facilitate heat dissipation from the terminal busbar 212, the inlet flow path 122 through which coolant is introduced into the heat sink 110 may be partially overlapped up and down relative to the trench 140. In other words, it may be desirable to have a coolant adjacent to the lower side of the trench 140 to dissipate heat absorbed by the first heat transfer material 160 to the outside of the battery pack 10.

Additionally, it may be desirable for inlet flow path 122 of the inner flow path 120 of the heat sink 110, through which cooler coolant flows than in the outlet flow path 124, to be disposed around the trench 140. To this end, the trench 140 and inlet flow path 122 are clustered in the center of the heat sink assembly 100. Another advantage of this arrangement is that when the plurality of battery modules 200 are disposed in two rows along the longitudinal direction L, the battery modules 200 on either side of the width direction W will have the busbar frame assembly 210 facing each other, which facilitates the configuration of electrical connections within the battery pack 10.

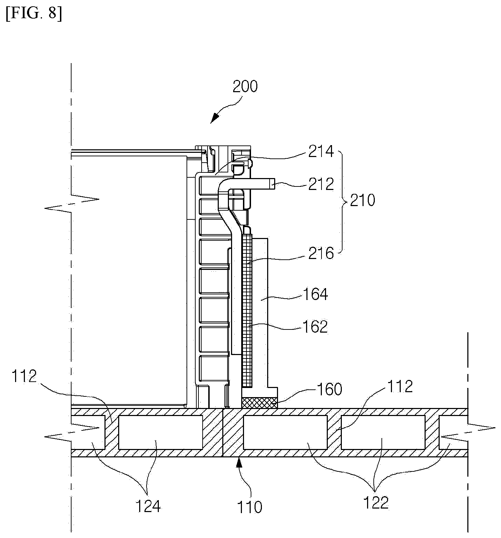

FIG. 8 is a drawing illustrating another aspect in which the terminal busbar 212 is thermally connected to the heat transfer material on the upper surface of the heat sink 110. The aspect of FIG. 8 does not include the trench 140 structure, which is intended to illustrate that the first heat transfer material 160 may not require the assistance of the trench 140 to be fixed. For example, if the first heat transfer material 160 has properties that allow it to retain some degree of shape (e.g., a high viscosity curable TIM, etc.), the trench 140 structure may not be applicable.

Additionally, as in the exemplary aspect of FIG. 8, the terminal busbar 212 may not be in direct contact with the first heat transfer material 160. For example, the terminal busbar 212 may be provided with a second heat transfer material 162 on its surface, and may include a heat conduction member 164 in contact with the second heat transfer material 162. The second heat transfer material 162 may be a curable material, such that it can structurally support the heat conduction member 164. The heat conduction member 164 may be a metal material such as aluminum, copper, or the like having a high heat transfer coefficient, and the heat conduction member 164 is in contact with the first heat transfer material 160 fixed to the heat sink 110. Thus, heat generated by the terminal busbar 212 is transferred to the first heat transfer material 160 by way of conduction heat transfer via the second heat transfer material 162 and the heat conduction member 164.

While the aspect of FIG. 8 increases the thermal conductivity resistance due to the addition of the second heat transfer material 162 and the heat conduction member 164 in the heat conduction path, it may benefit from increased design freedom in the mounting location or structure of the battery module 200, the placement of the first heat transfer material 160 and/or the trench 140 structure, etc.

The present disclosure has been described in more detail above with reference to the drawings and aspects.

### [Description of Reference Numerals]

10: BATTERY PACK
100: HEAT SINK ASSEMBLY
110: HEAT SINK
112: RIB
120: FLOW PATH
122: INLET FLOW PATH
122-1: EXTENSION FLOW PATH
124: OUTLET FLOW PATH
126: RETURN FLOW PATH
130: FIRST FACE
132: SECOND FACE
134: INLET PORT
136: OUTLET PORT
140: TRENCH
142: PIN STRUCTURE
150: END PLUG
152: INSERT
154: FRONT FACE
156: INLET PLUG
157: OUTLET PLUG
158: RETURN PLUG
160: FIRST HEAT TRANSFER MATERIAL
162: SECOND HEAT TRANSFER MATERIAL
164: HEAT CONDUCTION MEMBER
200: BATTERY MODULE
210: BUSBAR FRAME ASSEMBLY
212: TERMINAL BUSBAR
214: MAIN FRAME
216: COVER
L: LONGITUDINAL DIRECTION
W: WIDTH DIRECTION

## Claims

1. A heat sink assembly (100) comprising:
a heat sink (110) integrally molded with a plurality of ribs (112) therein along a longitudinal direction (L) having spaces between the ribs (112) forming coolant flow paths (120), wherein the heat sink (110) has open first and second faces at both ends in the longitudinal direction (L); and
end plugs (150) closing the first and second faces of both ends of the heat sink (110), wherein
on an upper surface of the heat sink (110), a first heat transfer material (160) protrudes and is configured to contact a bottom surface of a terminal busbar (212) provided on a battery module (200) to be mounted on the heat sink (110),
the first heat transfer material (160) is provided in a trench (140) forming a concave space on the upper surface of the heat sink (110),
**characterized in that**
an inlet flow path (122) through which coolant flows into the heat sink (110) is located below a bottom surface of the trench (140).

2. The heat sink assembly (100) of claim 1, wherein
the trench (140) is formed along a longitudinal direction (L) of the heat sink (110).

3. The heat sink assembly (100) of claim 1, wherein
a bottom surface of the trench (140) is provided with a pin structure (142), wherein
at least a portion of the first heat transfer material (160) is fixed on the pin structure (142).

4. The heat sink assembly (100) of claim 1, wherein
the inlet flow path (122) includes an extension flow path (122-1) protruding above the upper surface of the heat sink (110), wherein
the trench (140) shares a side wall with the extension flow path (122-1).

5. A battery pack (10) comprising:
the heat sink assembly (100) according to any one of claims 1 to 4; and
at least one battery module (200) mounted on the upper surface of the heat sink assembly (100), wherein
heat generated by a terminal busbar (212) provided in the battery module (200) is transferred to the first heat transfer material (160) by way of conduction heat transfer.

6. The battery pack (10) of claim 5, comprising:
a second heat transfer material (162) provided on the surface of the terminal busbar (212), and
a heat conduction member (164) in contact with the second heat transfer material (162), wherein
heat generated in the terminal busbar (212) is transferred to the first heat transfer material (160) by way of conduction heat transfer via the second heat transfer material (162) and heat conduction member (164).

7. A battery pack (10) comprising:
the heat sink assembly (100) according to any one of claims 1 to 4; and
at least one battery module (200) mounted on the upper surface of the heat sink assembly (100), wherein
the bottom surface of a terminal busbar (212) provided in the battery module (200) contacts the first heat transfer material (160) provided in the trench (140), whereby heat generated by the terminal busbar (212) is transferred to the first heat transfer material (160) by way of conduction heat transfer.

8. The battery pack (10) of claim 7, wherein
the trench (140) is formed by extending along the longitudinal direction (L) of the heat sink (110),
a plurality of battery modules (200) is mounted and aligned with their respective terminal busbars (212) facing the trench (140), wherein
the trench (140) overlaps at least a portion of an inlet flow path (122) through which coolant flows into the heat sink (110).

## Patentansprüche

1. Kühlkörperanordnung (100), umfassend:
einen Kühlkörper (110), der einstückig mit einer Vielzahl von Rippen (112) darin entlang einer Längsrichtung (L) geformt ist, der Zwischenräume zwischen den Rippen (112) aufweist, die Kühlmittelströmungswege (120) bilden, wobei der Kühlkörper (110) offene erste und zweite Flächen an beiden Enden in der Längsrichtung (L) aufweist; und
Endstopfen (150), die die ersten und zweiten Flächen beider Enden des Kühlkörpers (110) verschließen,
wobei
auf einer Oberseite des Kühlkörpers (110) ein erstes Wärmeübertragungsmaterial (160) vorsteht und so konfiguriert ist, dass es in Kontakt mit einer Unterseite einer Anschlusssammelschiene (212) steht, die auf einem Batteriemodul (200) vorgesehen ist, das auf dem Kühlkörper (110) zu montieren ist,
das erste Wärmeübertragungsmaterial (160) in einem Graben (140) vorgesehen ist, der einen konkaven Raum auf der Oberseite des Kühlkörpers (110) bildet,
**dadurch gekennzeichnet, dass**
ein Einlassströmungsweg (122), durch den Kühlmittel in den Kühlkörper (110) strömt, unter einer Unterseite des Grabens (140) angeordnet ist.

2. Kühlkörperanordnung (100) nach Anspruch 1, wobei
der Graben (140) entlang einer Längsrichtung (L) des Kühlkörpers (110) ausgebildet ist.

3. Kühlkörperanordnung (100) nach Anspruch 1, wobei
eine Unterseite des Grabens (140) mit einer Stiftstruktur (142) versehen ist, wobei
mindestens ein Teil des ersten Wärmeübertragungsmaterials (160) an der Stiftstruktur (142) befestigt ist.

4. Kühlkörperanordnung (100) nach Anspruch 1, wobei
der Einlassströmungsweg (122) einen Verlängerungsströmungsweg (122-1) enthält, der über die Oberseite des Kühlkörpers (110) vorsteht, wobei
der Graben (140) eine Seitenwand mit dem Verlängerungsströmungsweg (122-1) teilt.

5. Batteriepack (10), umfassend:
die Kühlkörperanordnung (100) nach einem der Ansprüche 1 bis 4; und
mindestens ein Batteriemodul (200), das auf der Oberseite der Kühlkörperanordnung (100) montiert ist, wobei
Wärme, die von einer Anschlusssammelschiene (212) erzeugt wird, die in dem Batteriemodul (200) vorgesehen ist, durch Wärmeleitung auf das erste Wärmeübertragungsmaterial (160) übertragen wird.

6. Batteriepack (10) nach Anspruch 5, umfassend:
ein zweites Wärmeübertragungsmaterial (162), das auf der Oberfläche der Anschlusssammelschiene (212) vorgesehen ist, und
ein Wärmeleitungselement (164), das in Kontakt mit dem zweiten Wärmeübertragungsmaterial (162) steht, wobei
Wärme, die in der Anschlusssammelschiene (212) erzeugt wird, durch Wärmeleitung über das zweite Wärmeübertragungsmaterial (162) und das Wärmeleitungselement (164) auf das erste Wärmeübertragungsmaterial (160) übertragen wird.

7. Batteriepack (10), umfassend:
die Kühlkörperanordnung (100) nach einem der Ansprüche 1 bis 4; und
mindestens ein Batteriemodul (200), das auf der Oberseite der Kühlkörperanordnung (100) montiert ist, wobei
die Unterseite einer Anschlusssammelschiene (212), die in dem Batteriemodul (200) vorgesehen ist, mit dem ersten Wärmeübertragungsmaterial (160) in Kontakt steht, das in dem Graben (140) vorgesehen ist, wodurch Wärme, die von der Anschlusssammelschiene (212) erzeugt wird, durch Wärmeleitung auf das erste Wärmeübertragungsmaterial (160) übertragen wird.

8. Batteriepack (10) nach Anspruch 7, wobei
der Graben (140) durch Erstreckung entlang der Längsrichtung (L) des Kühlkörpers (110) gebildet ist,
eine Vielzahl von Batteriemodulen (200) montiert und mit ihren jeweiligen Anschlusssammelschienen (212) ausgerichtet ist, die dem Graben (140) zugewandt sind, wobei
der Graben (140) mindestens einen Teil eines Einlassströmungswegs (122) überlappt, durch den Kühlmittel in den Kühlkörper (110) strömt.

## Revendications

1. Un ensemble dissipateur de chaleur (100) comprenant :
un dissipateur de chaleur (110) moulé d'un seul bloc avec une pluralité de nervures (112) à l'intérieur le long d'une direction longitudinale (L) ayant des espaces entre les nervures (112) formant des chemins d'écoulement de réfrigérant (120), dans lequel le dissipateur de chaleur (110) a des première et seconde faces ouvertes aux deux extrémités dans la direction longitudinale (L) ; et
des bouchons d'extrémité (150) fermant les première et seconde faces des deux extrémités du dissipateur de chaleur (110),
dans lequel
sur une surface supérieure du dissipateur de chaleur (110), un premier matériau de transfert de chaleur (160) fait saillie et est configuré pour entrer en contact avec une surface inférieure d'une barre omnibus de borne (212) prévue sur un module de batterie (200) à monter sur le dissipateur de chaleur (110),
le premier matériau de transfert de chaleur (160) est prévu dans une tranchée (140) formant un espace concave sur la surface supérieure du dissipateur de chaleur (110),
**caractérisé en ce que**
un chemin d'écoulement d'entrée (122) à travers lequel du réfrigérant s'écoule dans le dissipateur de chaleur (110) est situé sous une surface inférieure de la tranchée (140).

2. L'ensemble dissipateur de chaleur (100) selon la revendication 1, dans lequel
la tranchée (140) est formée le long d'une direction longitudinale (L) du dissipateur de chaleur (110).

3. L'ensemble dissipateur de chaleur (100) selon la revendication 1, dans lequel
une surface inférieure de la tranchée (140) est pourvue d'une structure à broches (142), dans lequel
au moins une partie du premier matériau de transfert de chaleur (160) est fixée sur la structure à broches (142).

4. L'ensemble dissipateur de chaleur (100) selon la revendication 1, dans lequel
le chemin d'écoulement d'entrée (122) inclut un chemin d'écoulement d'extension (122-1) faisant saillie au-dessus de la surface supérieure du dissipateur de chaleur (110), dans lequel
la tranchée (140) partage une paroi latérale avec le chemin d'écoulement d'extension (122-1).

5. Un bloc-batterie (10) comprenant :
l'ensemble dissipateur de chaleur (100) selon l'une quelconque des revendications 1 à 4 ; et
au moins un module de batterie (200) monté sur la surface supérieure de l'ensemble dissipateur de chaleur (100), dans lequel
la chaleur générée par une barre omnibus de borne (212) prévue dans le module de batterie (200) est transférée au premier matériau de transfert de chaleur (160) par transfert de chaleur par conduction.

6. Le bloc-batterie (10) selon la revendication 5, comprenant :
un second matériau de transfert de chaleur (162) prévu sur la surface de la barre omnibus de borne (212), et
un élément de conduction thermique (164) en contact avec le second matériau de transfert de chaleur (162), dans lequel
la chaleur générée dans la barre omnibus de borne (212) est transférée au premier matériau de transfert de chaleur (160) par transfert de chaleur par conduction via le second matériau de transfert de chaleur (162) et l'élément de conduction thermique (164).

7. Un bloc-batterie (10) comprenant :
l'ensemble dissipateur de chaleur (100) selon l'une quelconque des revendications 1 à 4 ; et
au moins un module de batterie (200) monté sur la surface supérieure de l'ensemble dissipateur de chaleur (100), dans lequel
la surface inférieure d'une barre omnibus de borne (212) prévue dans le module de batterie (200) entre en contact avec le premier matériau de transfert de chaleur (160) prévu dans la tranchée (140), de sorte que la chaleur générée par la barre omnibus de borne (212) est transférée au premier matériau de transfert de chaleur (160) par transfert de chaleur par conduction.

8. Le bloc-batterie (10) selon la revendication 7, dans lequel
la tranchée (140) est formée en s'étendant le long de la direction longitudinale (L) du dissipateur de chaleur (110),
une pluralité de modules de batterie (200) est montée et alignée avec leurs barres omnibus de borne (212) respectives faisant face à la tranchée (140), dans lequel
la tranchée (140) chevauche au moins une partie d'un chemin d'écoulement d'entrée (122) à travers lequel du réfrigérant s'écoule dans le dissipateur de chaleur (110).
